# EUROPEAN PATENT APPLICATION

(11) **EP 3 889 859 A1**
(43) Date of publication of application: **06.10.2021**
(21) Application number: 21163736.8
(22) Date of filing: 19.03.2021
(51) Int. Cl.: G06Q 10/06, G06Q 50/08

(54) **INFORMATION PROCESSING DEVICE, INFORMATION PROCESSING SYSTEM, AND INFORMATION PROCESSING METHOD**

(30) Priority: 31.03.2020 JP 2020062534
(71) Applicant: TOPCON CORPORATION, Tokyo 174-8580 (JP)
(72) Inventor: KIKUCHI, Takeshi, Itabashi-ku, Tokyo 174-8580 (JP); TAKANO, Yuji, Itabashi-ku, Tokyo 174-8580 (JP)
(74) Representative: dompatent von Kreisler Selting Werner - Partnerschaft von Patent- und Rechtsanwälten mbB

(57) **Abstract**

Provided is a technology capable of estimating a surveying instrument optimum for performing a survey according to details of an order from a contractee. An information processing device (100) includes an acquiring unit (131) configured to acquire order information related to order details of surveying work, and instrument-related information related to the type of instrument used with which the surveying work has been executed and the kind of carrying accessories; a collected data storage unit (121) configured to store the order information and the instrument-related information; an input order information extracting unit (132) configured to extract a workload level, the type of survey, attributes of a surveying object, and required deliverables accuracy as input order information from the order information acquired by the acquiring unit (131); and an estimation model generating unit (133) configured to generate an estimation model to estimate instrument-related information corresponding to order information by executing machine learning by using the input order information and instrument-related information as a learning data set.

## Description

### [Technical Field]

The present invention relates to an information processing device, an information processing system, and an information processing method.

### [Background Art]

When a contractor of a survey department, etc., of a surveying office or construction company accepts an order for surveying work, the contractor first accepts an order sheet in which order details are described from a contractee. Next, a person in charge of an accepting order or a person in charge of the work determines the kind and method of a survey to be taken from the details described in the order sheet. Then, the person in charge of accepting the order or the person in charge of the work selects a surveying instrument to be used for the survey to be taken and prepares the necessary carrying accessories, and secures workers.

### [Citation List]

### [Non-Patent Literature]

[Non-Patent Literature 1] Topcon i-Construction General Guide

### [Summary of Invention]

### [Technical Problem]

However, there are many kinds of surveying instruments, and many products having different specifications and functions are included as product line-ups of the same kind of surveying instruments. Even when surveying work is performed for the same purpose, surveying instruments that can be used differ depending on accuracies required for deliverables (refer to Non-Patent Literature 1). Further, even for creating the same deliverables, depending on the delivery deadline and the attributes of a surveying object (a mountainous area, a flatland area, etc.), the survey method varies and a surveying instrument to be used also differs.

Therefore, a person in charge of accepting an order, etc., needs to have extensive knowledge and experience to select a surveying instrument optimum for the order details in consideration of the matters described above. Such knowledge and experience proved complicated and difficult to acquire.

The present invention has been made in view of these circumstances, and an object thereof is to provide a technology capable of estimating a surveying instrument optimum for performing a survey according to details of an order from a contractee.

### [Solution to Problem]

In order to achieve the object described above, an information processing device according to an aspect of the present invention includes an acquiring unit configured to acquire order information related to order details of surveying work, and instrument-related information related to the type of instrument used with which the surveying work has been executed and the kind of carrying accessories; a collected data storage unit configured to store the order information and the instrument-related information; an input order information extracting unit configured to extract a workload level, the type of survey, attributes of a surveying object, and required deliverables accuracy as input order information from the order information acquired by the acquiring unit; and an estimation model generating unit configured to generate an estimation model to estimate instrument-related information corresponding to order information by executing machine learning by using the input order information and the instrument-related information as a learning data set.

In the aspect described above, it is also preferable that the information processing device further includes an estimation request acquiring unit configured to acquire new order information and an estimation request; an estimating unit configured to estimate instrument-related information corresponding to the new order information based on the estimation model; a results providing unit configured to provide estimation results; an estimation model storage unit configured to store the estimation model; and a results provision condition storage unit configured to store a provision condition of the estimation results, and when the estimation request acquiring unit acquires the new order information and the estimation request, the input order information extracting unit extracts a workload level, the type of survey, attributes of a surveying object, and required deliverables accuracy as input order information from the new order information, and the estimating unit estimates instrument-related information corresponding to the new order information, and the results providing unit provides the estimation results by applying the provision condition.

In the aspect described above, it is also preferable that the instrument-related information is associated with the number of surveying instruments to be used, the number of accessories, the qualifications required for workers, the number of workers, and the number of days required for the work.

In the aspect described above, it is also preferable that the order information includes an order drawing, and the input order information extracting unit extracts a workload level from the order drawing.

In the aspect described above, it is also preferable that the order information includes expressions relating to a purpose of the survey, and the input order information extracting unit extracts the type of survey to be executed from the expressions relating to the purpose of the survey.

In the aspect described above, it is also preferable that the order information includes position information of a surveying object, and the input order information extracting unit extracts attributes of the surveying object from the position information.

In the aspect described above, it is also preferable that the order information includes expressions relating to accuracy required for deliverables, and the input order information extracting unit extracts deliverables accuracy from the expressions relating to accuracy required for the deliverables.

An information processing system according to another aspect of the present invention includes the information processing device according to any of the aspects described above, and a terminal device configured to be capable of communicating with the information processing device, and the terminal device includes a data accepting unit configured to accept the order information and the instrument-related information and transmit them to the information processing device.

An information processing system according to still another aspect of the present invention includes the information processing device according to the aspect described above, and a terminal device configured to be capable of communicating with the information processing device, and the terminal device includes an estimation requesting unit configured to transmit the new order information and the estimation request to the information processing device, and a results acquiring unit configured to receive estimation results provided from the information processing device and display the estimation results on a display unit.

An information processing method according to still another aspect of the present invention causes a computer to execute a step of acquiring order information related to order details of surveying work, and instrument-related information related to the type of instrument used with which the surveying work has been executed and the kind of carrying accessories, a step of storing the order information and the instrument-related information, a step of extracting a workload level, the type of survey, attributes of a surveying object, and required deliverables accuracy as input order information from the acquired order information, and a step of generating an estimation model to estimate instrument-related information corresponding to order information newly acquired by executing machine learning by using the input order information and the instrument-related information as a learning data set.

In the aspect described above, it is also preferable that the information processing method further includes, when acquiring new order information and an estimation request, a step of extracting a workload level, the type of survey, attributes of a surveying object, and required deliverables accuracy as input order information from the new order information, a step of estimating instrument-related information corresponding to the new order information based on the estimation model, and a step of providing estimation results by applying an estimation results provision condition to the estimation results of the instrument-related information.

### [Effect of Invention]

By the information processing device, the information processing system, and the information processing method according to the aspects described above, a technology capable of estimating a surveying instrument optimum for performing a survey according to details of an order from a contractee can be provided.

### [Brief Description of Drawings]

FIG. 1 is a diagram schematically describing information processing according to an embodiment.
FIG. 2 is a diagram describing collected data and a learning data set in the same information processing.
FIG. 3 is a drawing illustrating a schematic configuration of the same information processing system.
FIG. 4 is a block diagram illustrating a configuration example of an information processing device relating to the same information processing system.
FIG. 5 is a block diagram illustrating a configuration example of a terminal device relating to the same information processing system.
FIG. 6 is a flowchart of processing of the terminal device in a learning mode.
FIG. 7 is a flowchart of processing of the information processing device in the learning mode.
FIG. 8 is a flowchart of processing of the terminal device in an estimation mode.
FIG. 9 is a flowchart of processing of the information processing device in the estimation mode.
FIG. 10 is a diagram illustrating an example of display of estimation results.
FIG. 11 is a block diagram illustrating a configuration example of an information processing device according to a modification of the same embodiment.
FIG. 12 is a flowchart of processing of a terminal device according to the same modification in an estimation mode.
FIG. 13 is a block diagram illustrating a configuration example of an information processing device according to another modification of the same embodiment.
FIG. 14 is a flowchart of processing of a terminal device according to the same modification in an estimation mode.

### [Description of Embodiment(s)]

Hereinafter, a preferred embodiment and modifications of the present invention will be described with reference to the drawings, however, the present invention is not limited to these. In the embodiment and modifications, the same components are provided with the same reference sign, and overlapping description will be omitted as appropriate.

### 1. Information Processing Including Estimation Model Generation Processing

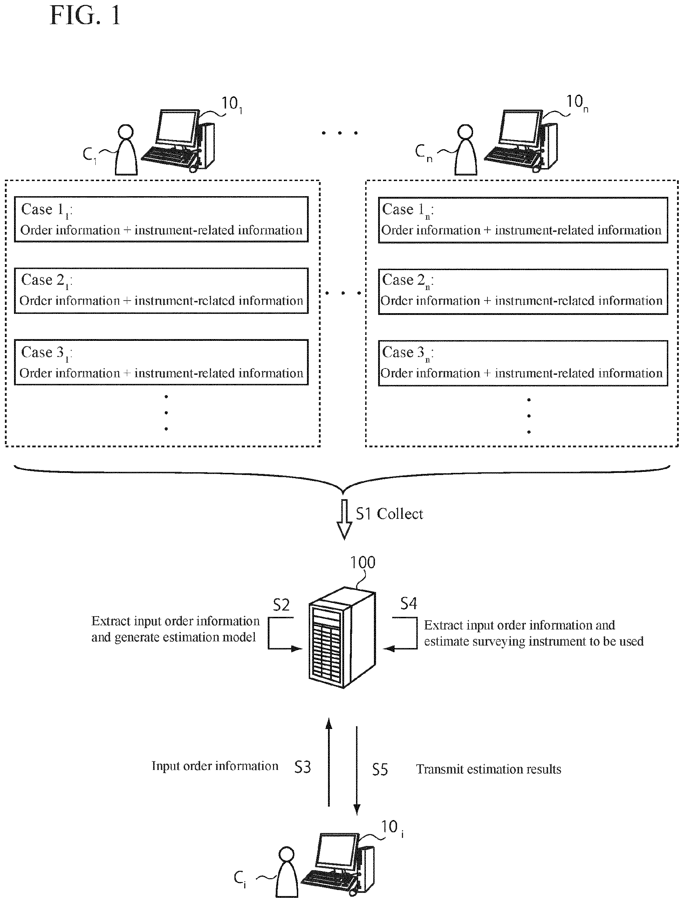

An outline of information processing according to an embodiment will be described with reference to FIG. 1. In the example of FIG. 1, information processing is executed by an information processing device 100.

The information processing device 100 is, for example, a management server that is owned by a manufacturer or a management company of a surveying instrument. Terminal devices 10₁ to 10ₙ (hereinafter, represented as the terminal devices 10 unless a description is given by focusing on one device) are terminal devices that are owned by contractors C₁ to Cₙ (hereinafter, represented as the contractors C unless a description is given by focusing on one contractor) accepting orders for surveying work.

The information processing device 100 and the terminal devices 10 are connected to be capable of communicating with each other through a communication network N.

The contractors C are a survey department, etc., of a surveying office or civil engineering and construction company that owns or manages a plurality of surveying instruments. The surveying instruments include, for example, levels such as automatic levels, tilting levels, and electronic levels, transits such as theodolites and altazimuth instruments, pulse or phase difference measuring total stations, GNSS devices, laser markers, pipe lasers, laser levels, and 3D laser scanners, etc.

In Step S1, the information processing device 100 collects order information and instrument-related information from the plurality of terminal devices 10.

The contractors C manage, as part of case management, order information when accepting orders for surveying work from contractees O, and instrument-related information when executing the surveying work, by using the terminal devices 10 and the information processing device 100. For example, the contractors C upload the information to the information processing device 100 from the terminal devices 10 through a webpage for each case. In this way, the information processing device 100 collects and accumulates order information and instrument-related information as part of records on surveying instruments to be managed by the terminal devices 10 and surveying work to be executed with the surveying instruments.

The order information and the instrument-related information are associated with cases and stored in the collected data storage unit 121 of the information processing device 100. In this way, the order information and the instrument-related information are collected by the information processing device 100. Hereinafter, order information and instrument-related information are collectively referred to as collected data.

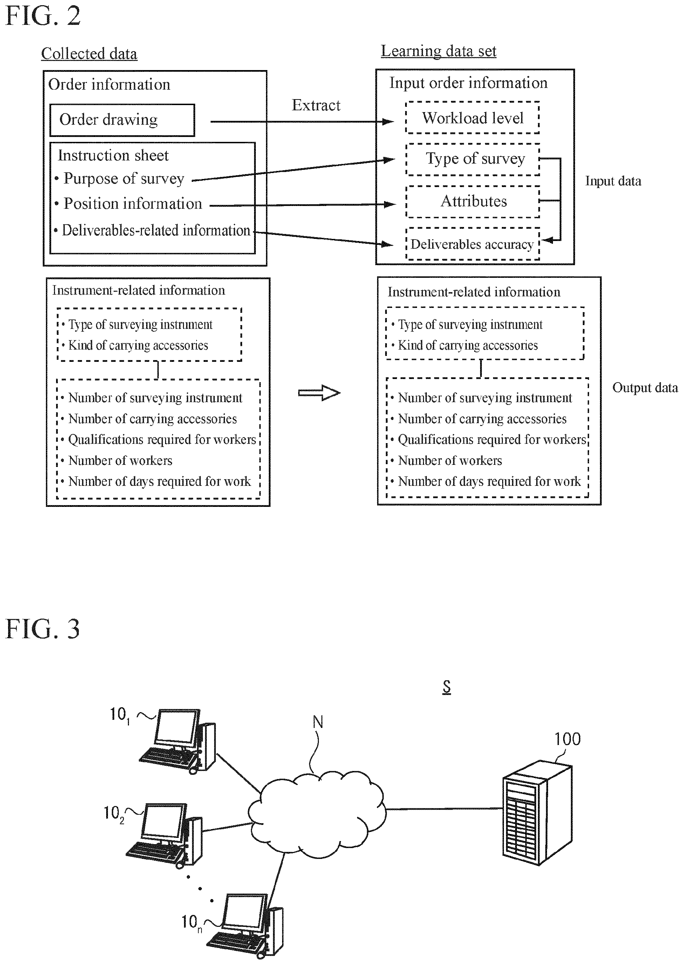

FIG. 2 illustrates an outline of collected data and an outline of a learning data set that is extracted from the collected data and is used for estimation model generation described later.

The order information is information described in an order drawing and an instruction sheet that is submitted from a contractee to the contractor C when the contractor C accepts an order for surveying work from the contractee.

The order drawing is a schematic view of a region to be surveyed. From the order drawing, a workload level can be extracted. The workload level is a magnitude of workload determined from the dimensions of the region described in the drawing, a size of the work region determined from a reduction scale, etc., a density of measurement points and control points, etc.

The instruction sheet contains at least the purpose, etc., of the survey, position information of a surveying object, and deliverables-related information.

The purpose, etc., of the survey is information related to the purpose of the ordered survey and the survey. For example, the purpose, etc., uses various expressions such as, "Control point survey for urban design," "For *** road construction," and "Survey for land sales," etc., and although the type of survey may be designated or not designated, the type of survey to be taken can be grasped (extracted) from description details including the purpose, etc., of the survey.

The type of survey is classified as control point survey, leveling, topographical survey, or applied survey. Applied survey includes river surveying, cadastral survey, route survey, sounding, topographical survey, tunnel survey, land development survey, etc., to be taken by combining control point survey, leveling, and topographical survey, etc. In addition, applied survey is hierarchized by having subclassifications. For example, route survey has subclassifications such as sectional surveying, profile leveling, and center-line surveying.

Position information of a surveying object is described in an instruction sheet in the form of, for example, position coordinates, address, or regional indication (the east of *** City, etc.), etc., of the surveying object. By referring to a topographical map or a map provided by the Geospatial Information Authority of Japan, attributes of a surveying object can be grasped (extracted) from position information of the surveying object.

Attributes are classified as, for example, a mountainous area, a hilly area, a flatland area, a river, an urban area, a wilderness, a forest, indoors, etc. Even when the type of survey is the same, required deliverables accuracy and measurement point density may differ according to the attributes. In addition, according to the attributes, a detailed method for executing the corresponding survey may differ even for the same type of survey, and accordingly, a surveying instrument to be used may differ.

The deliverables-related information is information related to accuracy required for deliverables (hereinafter, referred to as deliverables accuracy) described in an instruction sheet by using as expressions, for example, "According to the regulations of ***," "Scale: 1/25000," etc. The deliverables accuracy is determined according to the regulations of the Geospatial Information Authority of Japan based on the "Type of survey" and "Attributes" or determined on demand from the contractee. According to this, a surveying instrument to be used may differ, for example, when using a total station, which of a type with measurement accuracy of 1", a type with accuracy of 5", or a GNSS device is used is determined.

Deliverables-related information may include expressions such as "Measure designated measurement points" or "Measure broad topography of the land, road surface, building, etc." in relation to the density of measurement points, and according to this, a surveying instrument to be used may differ, for example, on whether a total station or a 3D scanner is used.

Therefore, from deliverables-related information described in an instruction sheet, "Deliverables accuracy" can be grasped (extracted). For example, leveling in periodic profile leveling of a mountainous area in a river survey requires accuracy regulated as 4th class leveling, and periodic profile leveling of a flatland area in a river survey requires accuracy regulated as 3rd class leveling.

"Instrument-related information" indicates the type of surveying instrument used to execute surveying work and the kind of carrying accessories (hereinafter, referred to as "Kinds of surveying instruments, etc." when these are collectively referred to). The kinds of surveying instruments, etc., are associated with information including the number of surveying instruments and the carrying accessories (hereinafter, referred to as "Number of surveying instruments, etc." when these are collectively referred to), the qualifications required for workers, the number of workers, and the number of days required for the work.

Here, the carrying accessories are accessories that need to be carried when using the surveying instrument on-site. For example, when the surveying instrument is an electronic level, a barcode leveling rod is the carrying accessory.

The qualifications required for workers are the qualifications required for workers to take the corresponding survey, and are categorized into, for example, a 1st-class surveyor qualification, a 2nd-class surveyor qualification, and an assistant surveyor qualification, etc.

Next, in Step S2, as illustrated in FIG. 2, the information processing device 100 extracts "Workload level," "Type of survey," "Attributes of surveying object," and "Deliverables accuracy" as input order information from order information, and performs machine learning by using a teacher data set including the input order information as input data and instrument-related information as output data.

Accordingly, an estimation model to estimate, as output data, the type of surveying instrument and the number of surveying instruments, the qualifications required for workers, the number of workers, and the number of days required for the work associated with the type of surveying instrument, is generated.

By this estimation model, a surveying instrument necessary for creating deliverables requested from the contractee according to order information can be estimated, and estimation results can be provided to the contractor C as described below.

For example, in Step S3, when the contractor Cᵢ inputs order information and requests estimation of a surveying instrument from the terminal device 10ᵢ, in Step S4, based on the estimation model generated in Step S2, the information processing device 100 proposes a surveying instrument and carrying accessories necessary for generating deliverables requested from the contractee.

Then, in Step S5, the information processing device 100 transmits the estimation results to the terminal device 10ᵢ, and the terminal device 10ᵢ provides the estimation results to the contractor Cᵢ.

### 2. Configuration of Information Processing System

### 2.1 Entire configuration

Hereinafter, details of an information processing system (hereinafter, also simply referred to as a system) S for executing the information processing described above will be described. FIG. 3 is a drawing illustrating a configuration example of the system S. The system S includes a plurality of terminal devices 10 and the information processing device 100.

The information processing device 100 and the terminal devices 10 are connected to each other to be capable of communicating wirelessly or by wire through a communication network N. The communication network N is, for example, a LAN (Local Area Network) or WAN (Wide Area Network) such as the internet. Information to be transmitted and received between the information processing device 100 and the terminal device 10 is managed in association with an ID of the contractor who owns the terminal device 10.

### 2.2 Information processing device 100

The information processing device 100 is, for example, a computer for a server. The information processing device 100 generates an estimation model based on order information and instrument-related information provided from the terminal devices 10. In addition, the information processing device 100 estimates a surveying instrument according to order information newly input from the terminal device 10 based on the estimation model.

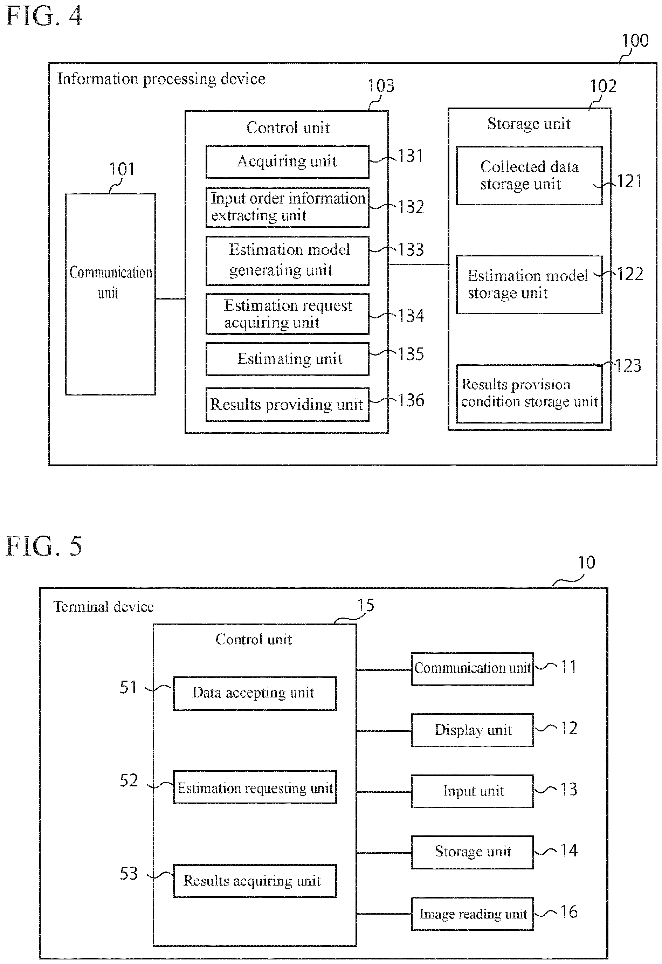

FIG. 4 is a diagram illustrating a configuration example of the information processing device 100. The information processing device 100 includes a communication unit 101, a storage unit 102, and a control unit 103.

The communication unit 101 is a communication control device such as a network adapter, a network interface card, a LAN card, and connects the information processing device 100 and the communication network N by wire or wirelessly. The control unit 103 can transmit and receive various information to and from the terminal devices 10 through the communication unit 101 and the communication network N.

The storage unit 102 is a computer-readable recording medium that stores and transmits information in a computer-processable form. As the storage unit 102, for example, a semiconductor memory device such as a RAM (Random Access Memory) and a flash memory, or an electronic medium such as an HDD (Hard Disc Drive) and an optical disc can be adopted. The storage unit 102 stores a program to cause the information processing device 100 to execute the information processing of the present embodiment. In addition, the storage unit 102 includes a collected data storage unit 121, an estimation model storage unit 122, and a results provision condition storage unit 123.

The collected data storage unit 121 stores order information and instrument-related information collected from the terminal devices 10. The estimation model storage unit 122 stores an estimation model generated by the estimation model generating unit 133.

The results provision condition storage unit 123 stores an estimation results provision condition in the terminal devices 10. The estimation results provision condition includes, for example, a priority condition such as whether priority is given to a delivery deadline or a smaller number of workers when displaying estimation results.

The control unit 103 includes, for example, a microcomputer including a CPU (Central Processing Unit), a ROM (Read Only Memory), a RAM, an input/output port, etc., and various circuits. The control unit 103 includes, as functional units, an acquiring unit 131, an input order information extracting unit 132, an estimation model generating unit 133, an estimation request acquiring unit 134, an estimating unit 135, and a results providing unit 136.

Functions of the respective units are realized by, for example, reading and executing programs stored in the ROM or the storage unit 102 by the CPU. A part of each unit may be configured by hardware such as ASIC (Application Specific Integrated Circuit), FPGA (Field-Programmable Gate Array).

The acquiring unit 131 acquires information transmitted from the terminal devices 10 through the communication unit 101. The acquiring unit 131 stores collected data acquired from the terminal devices 10 in the collected data storage unit 121.

The input order information extracting unit 131 extracts "Workload level," "Type of survey," "Attributes of surveying object," and "Deliverables accuracy" as input order information from the order information collected by the acquiring unit 131.

The estimation model generating unit 133 generates an estimation model by performing machine learning by using the input order information and the instrument-related information as a learning data set. The generated estimation model is stored in the estimation model storage unit 122.

The estimation request acquiring unit 134 accepts new order information and an estimation request received from the terminal device 10 through the communication unit 101.

From the new order information accepted by the estimation request acquiring unit 134, the estimating unit 135 estimates a surveying instrument and carrying accessories to be suitably used for this case based on the estimation model stored in the estimation model storage unit 122.

The results providing unit 136 provides estimation results to the terminal device 10 based on a condition stored in the results provision condition storage unit 123.

### 2.3 Terminal device 10

The terminal device 10 is realized by a desktop PC (Personal Computer), a notebook PC, a tablet terminal, a mobile phone, a PDA (Personal Digital Assistant), etc. The terminal device 10 includes a plurality of applications, for example, a web browser application, etc. The contractor C transmits order information to the information processing device 100 and requests the information processing device 100 to estimate a surveying instrument from the terminal device 10 through a webpage, and results of selection made by the information processing device 100 are displayed on the webpage.

FIG. 5 is a diagram illustrating a configuration example of the terminal device 10. The terminal device 10 includes a communication unit 11, a display unit 12, an input unit 13, a storage unit 14, a control unit 15, and an image reading unit 16.

The communication unit 11 is a communication control device such as a network adapter, a network interface card, a LAN card. The communication unit 11 connects the terminal device 10 to the communication network N by wire or wirelessly. The control unit 15 can transmit and receive various information to and from the information processing device 100 through the communication unit 11 and the communication network N.

The display unit 12 is an organic EL display or a liquid crystal display. The display unit 12 displays various information on a webpage based on control of the control unit 15.

The input unit 13 includes a keyboard including letter keys, numeric keys, and an enter key, etc., a mouse, a power button, etc. The contractor C can input various information through the input unit 13. The display unit 12 and the input unit 13 may be integrally configured as a touch panel display.

The storage unit 14 is a recording medium that stores and transmits information in a computer-processable form. As the storage unit 14, for example, a semiconductor memory device such as a RAM, a flash memory, or an electronic medium such as an HDD, or an optical disc can be adopted. The storage unit 14 stores programs for executing processing by the terminal device 10 in the information processing according to the present embodiment. In addition, the storage unit 14 stores software such as a web browser application and an image reading application.

The control unit 15 includes, for example, a microcomputer including a CPU, a ROM, a RAM, an input/output port, etc., and various circuits. The control unit 15 reads and executes various programs stored in the storage unit 14 and the RAM. The control unit 15 includes a data accepting unit 51, an estimation requesting unit 52, and a results acquiring unit 53. Functions of the respective units are realized by reading and executing programs stored in the ROM or the storage unit 14 by the CPU.

The data accepting unit 51 accepts order information and instrument-related information for each case input by the contractor through a web browser, and transmits them in association with a case ID to the information processing device 100.

The estimation requesting unit 52 accepts the input information and an instrument estimation request for the new case input by the contractor C through the web browser, and transmits them to the information processing device 100.

The results acquiring unit 53 receives estimation results from the information processing device 100 and displays the estimation results on the display unit 12, and stores the estimation results in the storage unit 14.

The image reading unit 16 is a so-called document scanner using an image sensor represented by a CCD (Charge Coupled Device) or a CIS (Contact Image Sensor). The image reading unit 16 scans an order drawing placed on a platen (not illustrated) and reads the order drawing as image data.

The read image data is converted into, for example, a PDF (Portable Document Format), and output to the data accepting unit 51. Alternatively, the read image data may be stored in the storage unit 14, or may be output and stored at the same time. The image data may be drawing data in a DXF (Drawing Exchange Format), etc.

### 3. Information Processing

Next, details of information processing by this system will be described. Information processing in this system includes a learning mode in which an estimation model is learned by machine learning, and an estimation mode in which an instrument to be used is estimated based on an estimation model. Hereinafter, processing of the terminal device 10 and processing of the information processing device 100 in each mode will be described.

### 3.1 Learning Mode

### 3.1.1 Processing of Terminal Device 10

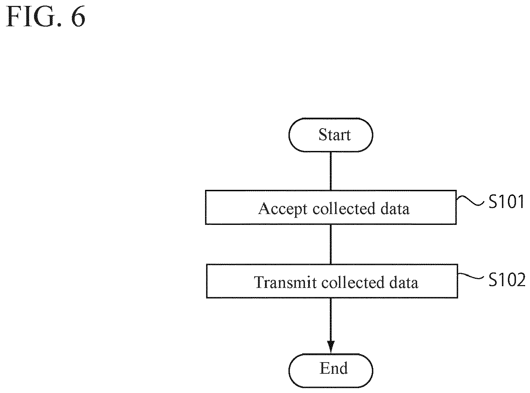

FIG. 6 is a flowchart of processing of the terminal device 10 in the learning mode. The learning mode is started when the contractor C opens the webpage and opens a collected data input screen.

When processing is started, in Step S101, the data accepting unit 51 accepts input collected data. An order drawing is input by, for example, reading the order drawing by the image reading unit 16. An instruction sheet is input, for example, by the contractor C by inputting described "Purpose, etc., of survey," "Position information of surveying object," and "Deliverables-related information" from the input unit 13. Instrument-related information is also input by the contractor C from the input unit 13. Instead of reading of the order drawing as drawing data by the image reading unit 16, it is also possible that the terminal device 10 is equipped with an external interface such as a USB (Universal Serial Bus), and the data accepting unit 51 reads the order drawing as file data in PDF format, DXF format, etc., from a recording medium such as a USB memory.

Next, in Step S102, the data accepting unit 51 associates the collected data with a case ID, transmits them to the information processing device 100, and ends the processing. Collected data to be transmitted by one processing may be either one of the order information and the instrument-related information, and it is not always necessary to transmit both at the same time.

### 3.1.2 Processing of Information Processing Device 100

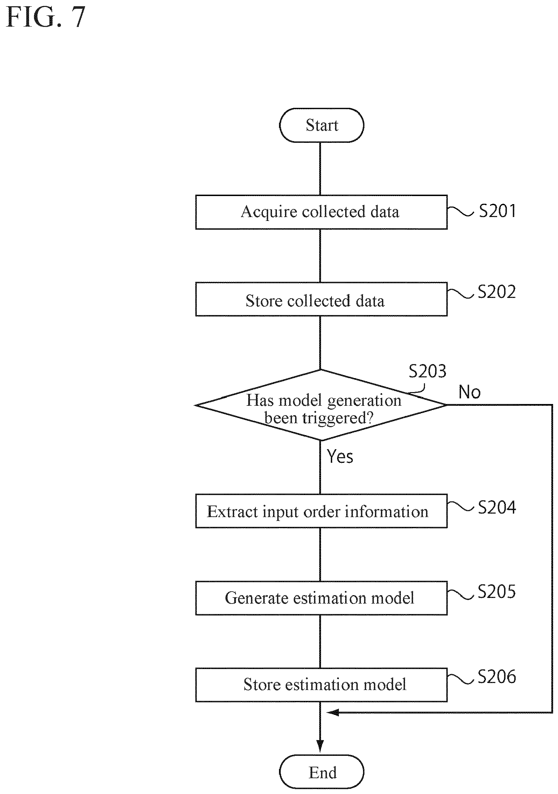

FIG. 7 is a flowchart of processing of the information processing device 100 in the learning mode. The processing illustrated in FIG. 7 is repeatedly executed by the information processing device 100 each time the information processing device 100 receives collected data from the terminal devices 10.

When the processing is started, in Step S201, the acquiring unit 131 acquires collected data. Next, in Step S202, the acquiring unit 131 stores the collected data in the collected data storage unit 121. Next, in Step S203, the control unit 103 determines whether generation of an estimation model has been triggered. The control unit 103 can generate a trigger for the generation each time a predetermined number of collected data for each new case is stored in the collected data storage unit 121 or each time a predetermined period of time elapses.

When the generation is not triggered (No), the processing is ended. On the other hand, when the generation is triggered (Yes), the processing shifts to Step S204.

In Step S204, the input order information extracting unit 132 extracts a workload level, the type of survey, attributes, and deliverables accuracy from the order information stored in the collected data storage unit 121 as illustrated in FIG. 2.

Specifically, first, the input order information extracting unit 132 illustrated in FIG. 4 identifies dimensions of a region and a reduction scale, etc., described in the order drawing from the image data of the drawing, and calculates a size of an actual work region. Next, the input order information extracting unit 132 extracts a workload level by calculating the workload level from the calculated work region size and the numbers of measurement points and control points, etc. The workload level may be classified into, for examples, 10 levels. This processing may be realized by, for example, clustering the image data of the order drawing by using a learning model of machine learning performed by using the dimensions of the region, the reduction scale, and the numbers of measurement points and control points as amounts of characteristics. For this processing, the input order information extracting unit 132 may include AI with a publicly known image recognition engine.

Next, the input order information extracting unit 132 extracts the "Type of survey" from expressions included in the purpose, etc., of the survey. The purpose, etc., of the survey are described by using various expressions such as "Control point survey for urban design," "For *** road construction," and "Survey for land sales." The input order information extracting unit 132 extracts the kind of corresponding survey from the expressions included in the purpose, etc., of the survey. This processing may be realized by using a learning model of machine learning of a learning data set including the expressions included in the purpose, etc., of the survey as input data and the type of survey as output data. For this processing, the input order information extracting unit 132 may include AI with a publicly known language recognition engine.

The input order information extracting unit 132 extracts whether the attributes of a surveying object are a mountainous area, a flatland area, a river, an urban area, or indoors from the "Position information of surveying object" by referring to a topographic map or a map provided by the Geospatial Information Authority of Japan, etc.

Further, the input order information extracting unit 132 extracts "Deliverables accuracy" from the "Deliverables-related information" and the "Type of survey" and "Attributes" extracted as described above by referring to regulations, etc., made by the Geospatial Information Authority of Japan described in the "Deliverables-related information." When predetermined accuracy is described in "Deliverables-related information," the described accuracy is extracted as "Deliverables accuracy."

Next, in Step S205, the estimation model generating unit 133 generates or updates an estimation model by performing machine learning by using a teacher data set including the input order information as input data and theinstrument-related information as output data and using the "Workload level," "Type of survey," "Attributes of surveying object," and "Deliverables accuracy" as amounts of characteristics.

Then, in Step S206, the estimation model is stored in the estimation model storage unit 122, and the processing is ended.

### 3.2 Estimation Mode

### 3.2.1 Processing of Terminal Device 10

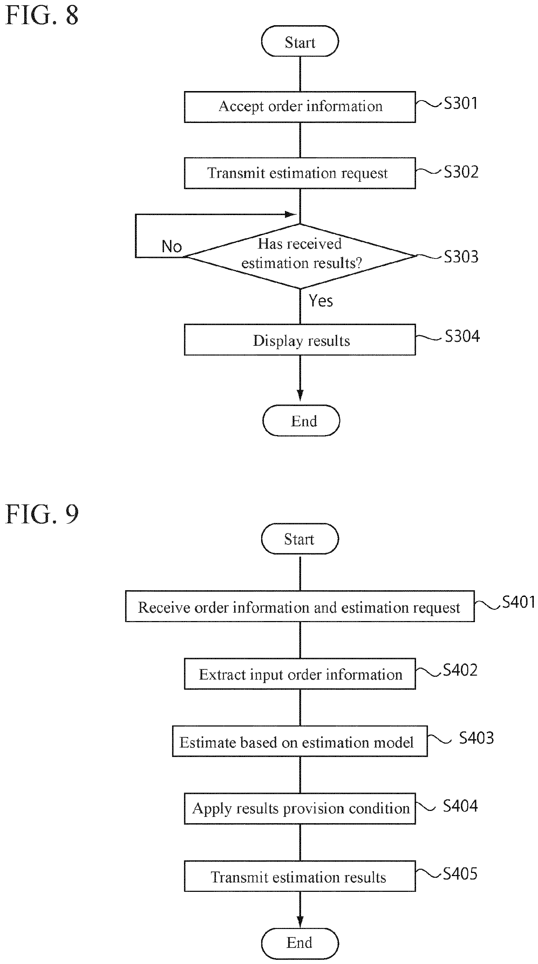

FIG. 8 is a flowchart of processing of the terminal device 10 in the estimation mode. The estimation mode is started when the contractor Cᵢ opens the webpage and newly inputs order information.

When the processing is started, in Step S301, the estimation requesting unit 52 accepts the input order information. The input method is the same as in Step S101.

Next, in Step S302, the estimation requesting unit 52 transmits an estimation request together with the order information to the information processing device 100.

Next, in Step S303, the results acquiring unit 53 waits while determining whether it has received estimation results from the information processing device 100. Then, upon reception of estimation results (Yes), in Step S304, the estimation results are displayed on the display unit 12 and the processing is ended. Display of the results will be described later.

### 3.2.2 Processing of Information Processing Device 100

FIG. 9 is a flowchart of processing of the information processing device 100 in the estimation mode. The processing is started when the information processing device 100 receives order information and an estimation request from the terminal device 10.

First, in Step S401, when the estimation request acquiring unit 134 receives order information and an estimation request, in Step S402, the input order information extracting unit 132 extracts input order information from the received order information as in Step S204.

Next, in Step S403, the estimating unit 135 estimates a surveying instrument to be used based on an estimation model stored in the estimation model storage unit 122.

Next, in Step S404, the results providing unit 135 applies a provision condition stored in the results provision condition storage unit 123, and in Step S405, transmits estimation results to the terminal device 10 and ends the processing.

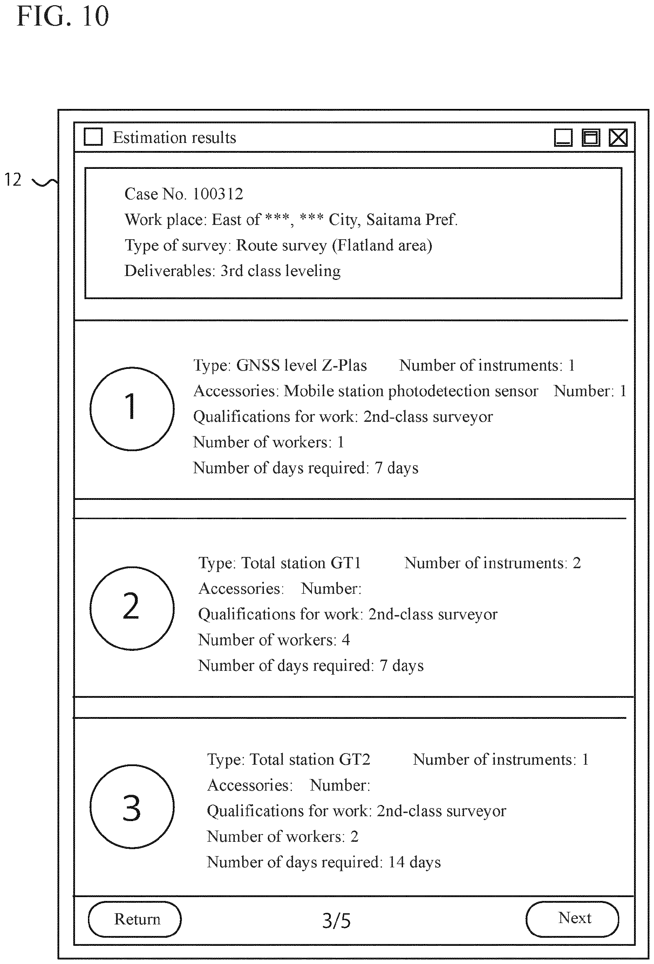

FIG. 10 illustrates an example of display of the estimation results on the display unit 12 of the terminal device 10. As illustrated, on the display unit, the type of surveying instrument estimated by the estimating unit 135 according to the input order information and information associated with the type of surveying instrument are displayed according to the results provision condition. In the display example, as the results provision condition, a smaller number of required days and a smaller number of workers are prioritized. The configuration may be made to allow the results provision condition to be changed on a request from the terminal device 10.

The estimation model is not limited to that used only in the information processing device 10 that has generated the estimation model, but may be used to estimate a surveying instrument according to order information in other information processing devices or terminal devices.

In this way, according to the present embodiment, an estimation model is generated by machine learning by using a learning data set including, as input data, the "Workload level," "Type of survey," "Attributes of surveying object," and "Deliverables accuracy" extracted from the order information described in an instruction sheet and, as output data, the "Type of surveying instrument" and "Kind of carrying accessories." By using the estimation model, according to the "Workload level," "Type of survey," "Attributes of surveying object," and "Deliverables accuracy" extracted from new order information, the type of surveying instrument and the kind of carrying accessories suitable for performing a survey can be estimated.

Normally, when a person in charge of accepting an order, etc., selects a necessary surveying instrument, according to required deliverables accuracy, the person needs to be familiar with information as to what type of surveying instrument is required and what level of deliverables accuracy is required according to the type of survey. However, by the information processing device, the information processing system, and the information processing method according to the present embodiment, a proper surveying instrument, etc., can be estimated without requiring such knowledge.

By a configuration in which, when acquiring new order information from the terminal device 10, the information processing device 100 estimates the type of surveying instrument and the kind of carrying accessories based on the estimation model described above, and provides estimation results to the terminal device 10, the contractor C operating the terminal device 10 can easily utilize the estimation results corresponding to the order information. As a result, the contractor C can quickly and easily select a surveying instrument even if the contractor C has little experience or knowledge about the selection of the surveying instrument.

In the present embodiment, a configuration is made so that, according to the type of surveying instrument and the kind of carrying accessories, the number of surveying instruments, the number of the carrying accessories, the qualifications required for workers, the number of workers, and the number of days required for the work, can be output, and therefore, the contractor C can utilize estimation results to make a survey plan in consideration of the number of surveying instruments, the number of the carrying accessories, and working personnel that the contractor C owns. By considering the number of days required for the work, the contractor C can determine whether the work can be completed before the delivery deadline, and can utilize this to consider whether the contractor C can accept the order.

In the present embodiment, a configuration is made in which, to generate an estimation model, order information and instrument-related information related to a large number and different types of surveying instruments managed by a plurality of terminal devices configured to be capable of communicating with the information processing device 100 are available as collected data, so that a contractor requesting an estimation can easily respond to order details that the contractor has never experienced.

Further, for generation of an estimation model, teacher data can be collected from the large number of terminals that are connected to the information processing device through a communication network, so that a surveying instrument can be estimated in consideration of case experiences of not only one contractor but many contractors, and the estimation accuracy is improved.

### 4. Modifications

### 4.1 Modification 1

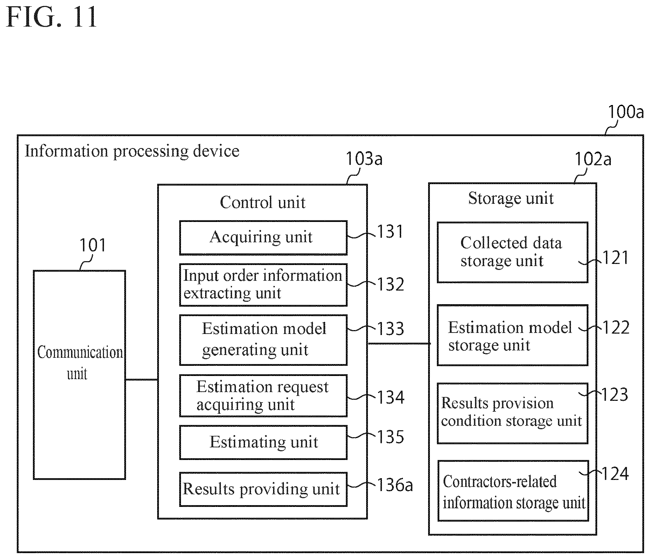

FIG. 11 is a configuration block diagram of an information processing device 100a of an information processing system Sa (not illustrated) according to a modification of the present embodiment.

The information processing device 100a additionally includes a contractors-related information storage unit 124 in a storage unit 102a in addition to the configuration of the information processing device 100, and includes a results providing unit 136a in a control unit 103a, instead of the results providing unit 136.

The contractors-related information storage unit 124 stores contractors-related information. The contractors-related information includes, for example, information on surveying instruments and information on carrying accessories that the contractors own, and a qualified person tenure status, etc.

The results providing unit 136a changes the estimation results display method by referring to the contractors-related information stored in the contractors-related information storage unit 124. Specifically, when the contractors-related information is information on surveying instruments that the contractors own, a result including a surveying instrument that the contractors do not own is excluded from the estimation results, and when the estimation results include a surveying instrument that the contractors C do not own, a reminder of this is displayed. Similarly, when the contractors-related information is information on carrying accessories, a result including carrying accessories that the contractors do not own is excluded from the estimation results, and a reminder that carrying accessories that the contractors C do not own is included is displayed. Similarly, when the contractors-related information is a qualified person tenure status, a case requiring a qualified person not included in the contractors C is excluded from the estimation results.

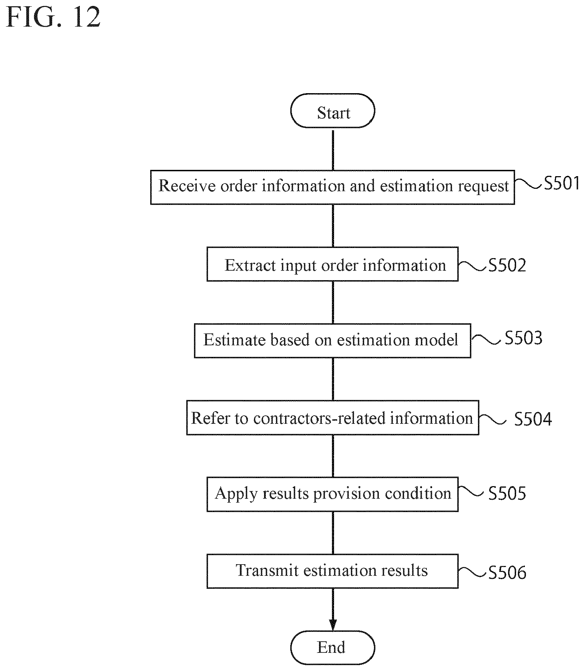

FIG. 12 is a flowchart of processing of the information processing device 100a in the estimation mode. In Step S503, as in Step S403, after estimation is made from order information acquired from the terminal devices 10 based on the estimation model, in Step S504, the results providing unit 136a changes the estimation results provision method according to the current statuses of the contractors C by referring to the contractors-related information.

Then, as in Steps S404 and S405, the processing is ended.

In this way, the estimation results displayed on the display units 12 of the terminal devices 10 reflects ownership statuses of surveying instruments and carrying accessories of the contractors C and a qualified person tenure status. Accordingly, a person in charge of accepting an order, etc., does not need to recheck ownership statuses of surveying instruments and carrying accessories when making a survey plan from the obtained estimation results, and the work efficiency is improved.

In the present modification, usage conditions of surveying instruments, etc., are also reflected in the contractors-related information and held, however, a configuration in which an instrument that is being used and is not available is excluded from the display is also possible. With this configuration, a surveying instrument more suitable to the current circumstances can be selected.

### 4.2 Modification 2

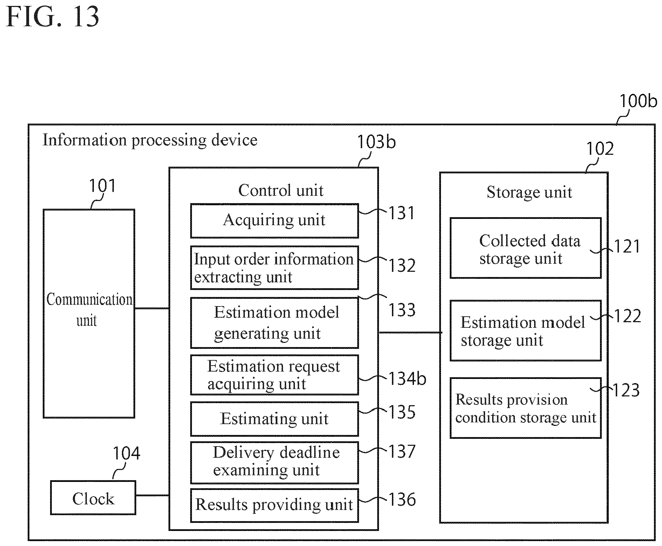

FIG. 13 is a configuration block diagram of an information processing device 100b of an information processing system Sb (not illustrated) according to another modification of the present embodiment.

The information processing device 100b includes a clock 104 in addition to the configuration of the information processing device 100. In addition, the information processing device 100b includes a delivery deadline examining unit 137 in a control unit 103b. Further, the information processing device 100b includes an estimation request acquiring unit 134b instead of the estimation request acquiring unit 134.

The terminal device 10 in the present modification has the same configuration as that of the terminal device 10 in the embodiment, however, in the estimation mode, at the same time as transmission of an estimation request in Step S302, transmits delivery deadline information described in an instruction sheet and input into the terminal devices 10.

The clock 104 is a device to measure date and time. The clock may be built in the control unit 103b.

The estimation request acquiring unit 134b acquires an estimation request transmitted from the terminal device 10, and acquires delivery deadline information.

The delivery deadline examining unit 137 calculates the number of days before a delivery deadline by comparing current date and time acquired by the clock 104 with the delivery deadline. The delivery deadline examining unit 137 excludes an estimation result that cannot be delivered by the delivery deadline from estimation results output from the estimating unit 135. The result that cannot be delivered by the delivery deadline may include not only a case where the number of days required for the work exceeds the calculated number of days before the delivery deadline, but also a case where a predetermined spare period cannot be secured in the days before the delivery deadline.

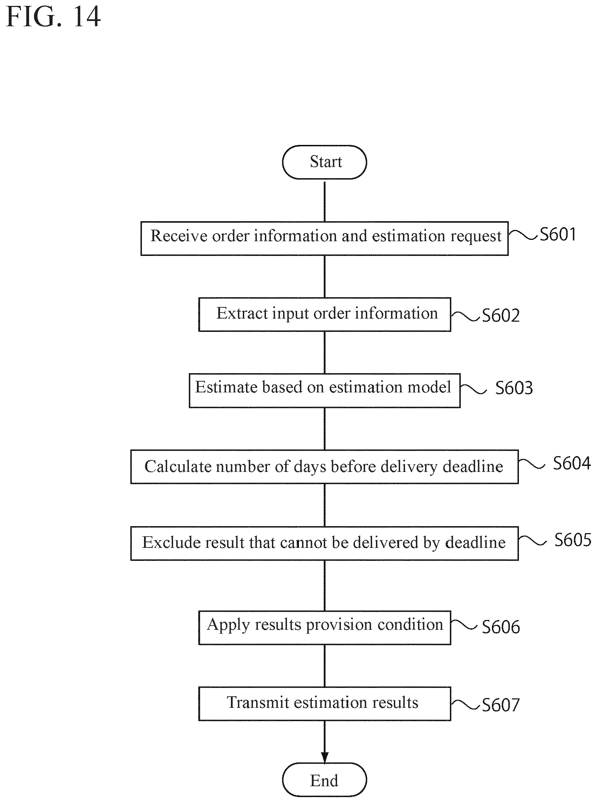

FIG. 14 is a flowchart of processing of the information processing device 100a in the estimation mode of the present modification. In the present modification, in Step S603, as in Step S403, after estimation is made based on the estimation model, in Step S604, the delivery deadline examining unit 137 calculates the number of days before a delivery deadline by comparing the current date and time acquired by the clock 104 with the delivery deadline.

Next, in Step S605, the delivery deadline examining unit 137 excludes a result that cannot be delivered by the delivery deadline from the estimation results output from the estimation unit 135.

Then, as in Steps S404 and S405, the processing is ended.

In this way, estimation results examining the delivery deadline can be provided to the terminal device 10. As a result, a person in charge of accepting an order of the contractor C can select a surveying instrument in consideration of the delivery deadline.

### 4.3 Other modifications

As another modification, it is also possible that the terminal devices 10 are equipped with AI (Artificial Intelligence)-OCR (Optical Character Reader), and the "Purpose, etc., of survey," "Position information of surveying object," and "Deliverables-related information" are read by the image reading unit 16, and each of the information is recognized by the AI-OCR and input into the data accepting unit 51. In this way, an input work by the person in charge of accepting an order from the input unit 13 can be omitted, and the workload can be reduced.

Although the preferred embodiments of the present invention have been described above, the above embodiments are examples of the present invention and these can be combined based on the knowledge of a person skilled in the art, and such combined embodiments are also included in the scope of the present invention.

### [Reference Signs List]

- S, Sa, Sb:: Information processing system
- 10 (10₁ to 10ₙ) :: Terminal device
- 12:: Display unit
- 51:: Data accepting unit
- 52:: Estimation requesting unit
- 53:: Results acquiring unit
- 100, 100a, 100b:: Information processing device
- 121:: Collected data storage unit
- 122:: Estimation model storage unit
- 123:: Results provision condition storage unit
- 124:: Contractors-related information storage unit
- 131:: Acquiring unit
- 132:: Input order information extracting unit
- 133:: Estimation model generating unit
- 134, 134b:: Estimation request acquiring unit
- 135:: Estimating unit
- 136, 136a:: Results providing unit
- 137:: Delivery deadline examining unit
- N:: Communication network

## Claims

1. An information processing device comprising:
an acquiring unit configured to acquire order information related to order details of surveying work, and instrument-related information related to the type of instrument used with which the surveying work has been executed and the kind of carrying accessories;
a collected data storage unit configured to store the order information and the instrument-related information;
an input order information extracting unit configured to extract a workload level, the type of survey, attributes of a surveying object, and required deliverables accuracy as input order information from the order information acquired by the acquiring unit; and
an estimation model generating unit configured to generate an estimation model to estimate instrument-related information corresponding to order information by executing machine learning by using the input order information and the instrument-related information as a learning data set.

2. The information processing device according to Claim 1, further comprising:
an estimation request acquiring unit configured to acquire new order information and an estimation request;
an estimating unit configured to estimate instrument-related information corresponding to the new order information based on the estimation model;
a results providing unit configured to provide estimation results;
an estimation model storage unit configured to store the estimation model; and
a results provision condition storage unit configured to store a provision condition of the estimation results, wherein
when the estimation request acquiring unit acquires the new order information and the estimation request,
the input order information extracting unit extracts a workload level, the type of survey, attributes of a surveying object, and required deliverables accuracy as input order information from the new order information,
the estimating unit estimates instrument-related information corresponding to the new order information, and
the results providing unit provides the estimation results by applying the provision condition.

3. The information processing device according to Claim 1 or 2, wherein the instrument-related information is associated with the number of surveying instruments to be used, the number of carrying accessories, the qualifications required for workers, the number of workers, and the number of days required for the work.

4. The information processing device according to any of Claims 1 to 3, wherein the order information includes an order drawing, and the input order information extracting unit extracts a workload level from the order drawing.

5. The information processing device according to any of Claims 1 to 4, wherein the order information includes expressions relating to a purpose of the survey, and the input order information extracting unit extracts the type of survey to be executed from the expressions relating to the purpose of the survey.

6. The information processing device according to any of Claims 1 to 5, wherein the order information includes position information of a surveying object, and the input order information extracting unit extracts attributes of the surveying object from the position information.

7. The information processing device according to any of Claims 1 to 6, wherein the order information includes expressions relating to accuracy required for deliverables, and the input order information extracting unit extracts deliverables accuracy from the expressions relating to accuracy required for the deliverables.

8. An information processing system comprising:
the information processing device according to any of Claims 1 to 7; and
a terminal device configured to be capable of communicating with the information processing device, wherein
the terminal device includes
a data accepting unit configured to accept the order information and the instrument-related information and transmit them to the information processing device.

9. An information processing system comprising:
the information processing device according to any of Claims 2 and Claims 3 to 7 dependent on Claim 2; and
a terminal device configured to be capable of communicating with the information processing device, wherein
the terminal device includes
an estimation requesting unit configured to transmit the new order information and the estimation request to the information processing device, and
a results acquiring unit configured to receive estimation results provided from the information processing device and display the estimation results on a display unit.

10. An information processing method to be executed by a computer, comprising:
a step of acquiring order information related to order details of surveying work, and instrument-related information related to the type of instrument used with which the surveying work has been executed and the kind of carrying accessories;
a step of storing the order information and the instrument-related information;
a step of extracting a workload level, the type of survey, attributes of a surveying object, and required deliverables accuracy as input order information from the acquired order information; and
a step of generating an estimation model to estimate instrument-related information corresponding to order information newly acquired by executing machine learning by using the input order information and the instrument-related information as a learning data set.

11. The information processing method according to Claim 10, further comprising:
when acquiring new order information and an estimation request, a step of extracting a workload level, the type of survey, attributes of a surveying object, and required deliverables accuracy as input order information from the new order information;
a step of estimating instrument-related information corresponding to the new order information based on the estimation model; and
a step of providing estimation results by applying an estimation results provision condition to the estimation results.
